# EUROPEAN PATENT SPECIFICATION

(11) **EP 2 097 699 B1**
(45) Date of publication and mention of the grant of the patent: **19.06.2019**
(21) Application number: 07869919.6
(22) Date of filing: 27.12.2007
(51) Int. Cl.: B01J 19/24, C01B 21/09, B01F 3/08, C02F 1/76

(54) **USE OF AN APPARATUS FOR PRODUCING STABLE CHLORAMINE**
VERWENDUNG EINER VORRICHTUNG ZUR HERSTELLUNG VON STABILEM CHLORAMIN
UTILISATION D'UN APPAREIL POUR PRODUIRE CHLORAMIN STABLE

(30) Priority: 29.12.2006 US 618174
(43) Date of publication of application: 09.09.2009
(73) Proprietor: Nalco Company, Naperville, IL 60563-1198 (US)
(72) Inventor: GUPTA, Amit, Aurora, Illinois 60503 (US); RAMESH, Manian, Barrington Hill, Illinois 60010 (US); ELLIOTT, Randall, Naperville, Illinois 60565 (US)
(74) Representative: Godemeyer Blum Lenze Patentanwälte Partnerschaft mbB - werkpatent
(86) International application number: PCT/US2007/088869
(87) International publication number: WO 2008/083182

(56) References cited:
- GB-A- 1 569 518
- US-A- 5 918 976
- US-A- 5 976 386
- US-A1- 2005 197 474
- US-A1- 2005 271 575

## Description

### TECHNICAL FIELD

This disclosure relates to the production of a stable oxidizing biocide and the apparatus used in the said production. The disclosure has several embodiments of the apparatus but there are two main embodiments of the disclosure, in situ production and remote production. The fact that the oxidizing biocide is in a more stable form allows for its production, storage and transportation. The disclosure demonstrates the apparatus used to produce a stable and functional chloramine as one example of a stable oxidizing biocide, which allows for the use of chloramines in water treatment systems, and a wide variety of other treatment systems, as biocidal composition without its rapid degradation.

### BACKGROUND

The invention described here pertains to the use of an apparatus for production of a biofouling control agent. The basis for the invention is an apparatus that provides for the composition of the reactants and the conditions for production using concentrated reactants, to convert two liquid solutions from their native chemical form to another, with altered biocidal properties.

Throughout the world, there are many different types of industrial water systems. Industrial water systems exist so that necessary chemical, mechanical and biological processes can be conducted to reach the desired outcome. Fouling can occur even in industrial water systems treated with the best water treatment programs currently available. For purposes of this patent application "fouling" is defined as "the deposition of any organic or inorganic material on a surface".

If these industrial water systems are not treated for microbial fouling control, then they will become heavily fouled. Fouling has a negative impact on the industrial water system. For example, severe mineral scale (inorganic material) will buildup on the water contact surfaces and anywhere there is scale, there is an ideal environment for the growth of microorganisms.

Fouling occurs by a variety of mechanisms including deposition of air-borne and water-borne and water-formed contaminants, water stagnation, process leaks, and other factors. If allowed to progress, the system can suffer from decreased operational efficiency, premature equipment failure, loss in productivity, loss in product quality, and increased health-related risks associated with microbial fouling.

Fouling can also occur due to microbiological contamination. Sources of microbial contamination in industrial water systems are numerous and may include, but are not limited to, air-borne contamination, water make-up, process leaks and improperly cleaned equipment. These microorganisms can establish microbial communities on any wetted or semi-wetted surface of the water system. Once these microbial populations are present in the bulk water more than 99% of the microbes present in the water will be present on all surfaces, in the form of biofilms.

Exopolymeric substance secreted from the microorganisms aid in the formation of biofilms as the microbial communities develop on the surface. These biofilms are complex ecosystems that establish a means for concentrating nutrients and offer protection for growth. Biofilms can accelerate scale, corrosion, and other fouling processes. Not only do biofilms contribute to reduction of system efficiencies, but they also provide an excellent environment for microbial proliferation that can include pathogenic bacteria. It is therefore important that biofilms and other fouling processes be reduced to the greatest extent possible to maximize process efficiency and minimize the health-related risks from water-borne pathogens.

Several factors contribute to the problem of biological fouling and govern its extent. Water temperature; water pH; organic and inorganic nutrients, growth conditions such as aerobic or anaerobic conditions, and in some cases the presence or absence of sunlight, etc. can play an important role. These factors also help in deciding what types of microorganisms might be present in the water system.

As described earlier, biological fouling can cause unwanted process interferences and therefore must be controlled. Many different approaches are utilized for the control of biological fouling in industrial processes. The most commonly used method is the application of biocidal compounds to the process waters. The biocides applied may be oxidizing or non-oxidizing in nature. Due to several different factors such as economics and environmental concerns, the oxidizing biocides are preferred. Oxidizing biocides such as chlorine gas, hypochlorous acid, bromine derived biocides, and other oxidizing biocides are widely used in the treatment of industrial water systems.

One factor in establishing the efficacy of oxidizing biocides is the presence of components within the water matrix that would constitute a "chlorine demand" or oxidizing biocide demand. "Chlorine demand" is defined as the quantity of chlorine that is reduced or otherwise transformed to inert forms of chlorine by substances in the water. Chlorine-consuming substances include, but are not limited to, microorganisms, organic molecules, ammonia and amino derivatives; sulfides, cyanides, oxidizable cations, pulp lignins, starch, sugars, oil, water treatment additives like scale and corrosion inhibitors, etc. Microbial growth in the water and in biofilms contributes to the chlorine demand of the water and to the chlorine demand of the system to be treated. Conventional oxidizing biocides were found to be ineffective in waters containing a high chlorine demand, including heavy slimes. Non-oxidizing biocides are usually recommended for such waters.

Chloramines are effective and are typically used in conditions where a high demand for oxidizing biocides such as chlorine exists or under conditions that benefit from the persistence of an 'oxidizing' biocide. Domestic water systems are increasingly being treated with chloramines. Chloramines are generally formed when free chlorine reacts with ammonia present or added to the waters. Many different methods for production of chloramines have been documented. Certain key parameters of the reaction between the chlorine and the nitrogen source determine the stability, and efficacy of the produced biocidal compound. The previously described methods have relied on either the pre-formation of dilute solutions of the reactants followed by their combination to produce a solution of chloramines. The reactants are an amine source in the form of an ammonium salt (sulfate, bromide, or chloride) and a Cl-donor (chlorine donor) in the form of gas or combined with alkali earth metal (Na or Ca). Also, the described methods have relied on controlling the pH of the reaction mix by addition of a reactant at a high pH or by the separate addition of a caustic solution. The disinfectant thus produced must be immediately fed into the system being treated since the disinfectant degrades rapidly. The disinfectant solution is generated outside the system being treated and then fed into the aqueous system for treatment. In previously described methods of production for treatment of liquids to control biological fouling, a significant problem occurred in that the active biocidal ingredient was unstable chemically and rapidly decomposed with a resulting fast drop in pH. This rapid deterioration of the biocidal ingredient resulted in a loss in efficacy. It was also observed that the pH of the active biocidal ingredient was never >8.0 due to the rapid decomposition of the biocidal component (referenced in US5976386).

Document GB 1569518 A1 relates to a process for producing ethylene polymers using a static mixer.

Document US 5,918,976 A discloses a process for forming a compound by mixing at least two components, which comprises the steps of: circulating a specific component along a circulation route; and mixing the specific component with a second component different from the specific component by flowing the second component different from the specific component in the middle of the circulation route under specific mixing conditions to form a compound during circulation, wherein the mixing conditions are controlled so that the mixing conditions are changed accompanied with increase in a formation amount of the compound.

Document US 5,976,386 A discloses a method and apparatus for treating a liquid to inhibit growth of living organisms therein by adding to the liquid an active biocidal ingredient formed by mixing an oxidant and an amine source, by: producing a predetermined dilution of the oxidant; producing a predetermined dilution of the amine source; synchronously metering the two dilutions into a conduit to continuously mix therein according to a predetermined ratio to produce the active biocidal ingredient having high reproducibility, stability and efficacy in situ in the conduit; and continuously injecting the active biocidal ingredient, as it is produced in situ in the conduit, directly from the conduit into the liquid being treated.

Document US 2005/271575 A1 discloses novel devices for synthesizing ferrate and uses thereof. One aspect of the invention relates to devices and systems for synthesizing ferrate at a site proximal to the site of use.

Document US 2005/197474 A1 discloses a method for the continuous production of polydienes, the method comprising the steps of (a) charging a mixture of one or more monomer, catalyst system, and less than 50% weight percent organic solvent based on the total weight of the monomer, catalyst and solvent, into first vessel, (b) polymerizing the monomer to a conversion of up to 20% by weight of the monomer to form a mixture of reactive polymer and monomer, (c) removing the mixture of reactive polymer and monomer from the vessel, and (d) terminating the reactive polymer prior to a total monomer conversion of 25% by weight.

### SUMMARY

The current disclosure describes the following :
1. An apparatus to properly prepare a stable oxidizing biocide.
2. An apparatus, which is able to produce an oxidizing biocide either as remote production or in situ production.
3. A method for producing a stable oxidizing biocide without the need to dilute the reaction components prior to combination.
4. The stable oxidizing biocide produced is chloramine.

### BRIEF DESCRIPTION OF THE FIGURES

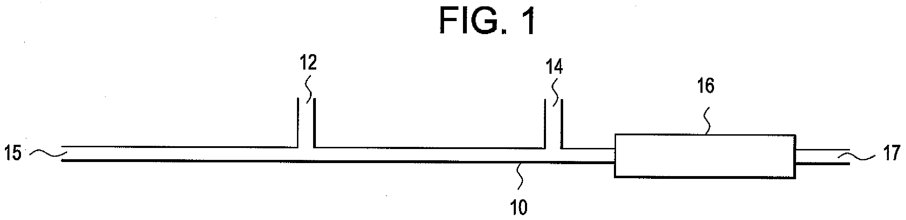

Fig. 1 a schematic view an apparatus not according to the invention.

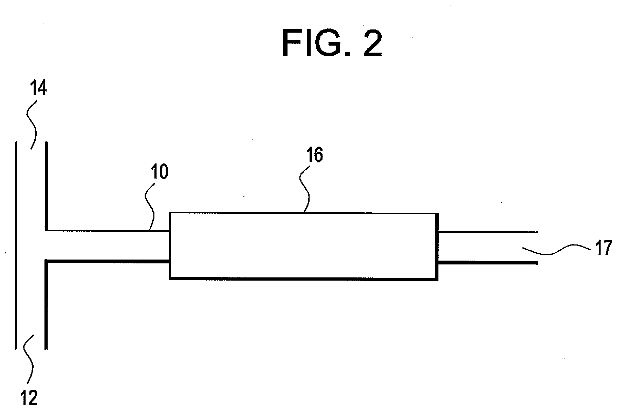

Fig. 2 a schematic view of an embodiment of the apparatus.

### DETAILED DESCRIPTION

The foregoing may be better understood by reference to the following figures, which are intended to illustrate uses for carrying out the invention.

The disclosure relates to an apparatus (not according to the invention) for the production of a stable oxidizing biocide 10 comprising, a first feed line 12, a second feed line 14, a third feed line 15, an agitator 16, and a product outlet 17. The third feed line 15 of the invention is used to supply the reaction means and reactants into the apparatus to produce the stable oxidizing biocide. The third feed line 15 is used for the reaction means, which is preferably water and most preferably the drive water of the system. The drive water can be derived from the process being treated with the oxidizing biocide.

In an embodiment according to the invention, the apparatus 10 used in the method for the production of chloramine comprises a first feed line 12, a second feed line 14, an agitator 16, and a product outlet 17 as specified in claim 1. The first 12 and second feed lines 14 are for the transport of the reactants that are used to produce the stable oxidizing biocide. The embodiments of the present invention contain the following components in common therefore the description below is relevant to all embodiments.

The agitator 16 of the invention is an inline mixer that is static. The product outlet 17 of the invention is directly connected to the process being treated to provide in situ production of the oxidizing biocide or may be in connection with a storage device to store the oxidizing biocide for later use. The invention also can have the product outlet 17 in fluid connection with the process being treated to provide in situ production of the oxidizing biocide.

The stable biocide for production with the apparatus 10 is chloramine. The reactants that pass through the first 12 and second feed lines 14 for the production of stable chloramine are concentrated chlorine source and concentrated amine source.

## Claims

1. Use of an apparatus (10) for the production of chloramine comprising:
(i) a first feed line (12),
(ii) a second feed line (14),
(iii) a static inline mixer (16), and
(iv) a chloramine outlet (17),
wherein the first feed line (12) and the second feed line (14) are in fluid connection with the chloramine outlet (17),
wherein the first feed line (12) and the second feed line (14) are used to supply a concentrated chlorine source and a concentrated amine source for production of the chloramine.

2. The use of claim 1 wherein the chloramine outlet (17) is in fluid connection with a storage device.

3. The use of claim 1 wherein the chloramine outlet (17) is in fluid connection with a process being treated.

## Patentansprüche

1. Verwendung einer Vorrichtung (10) für die Herstellung von Chloramin, Folgendes umfassend:
(i) eine erste Zuleitung (12),
(ii) eine zweite Zuleitung (14),
(iii) einen statischen Inline-Mischer (16), und
(iv) einen Chloramin-Auslass (17),
wobei die erste Zuleitung (12) und die zweite Zuleitung (14) in Fluidverbindung mit dem Chloramin-Auslass (17) stehen,
wobei die erste Zuleitung (12) und die zweite Zuleitung (14) verwendet werden, um eine konzentrierte Chlorquelle und eine konzentrierte Aminquelle zur Herstellung des Chloramins zu versorgen.

2. Verwendung nach Anspruch 1, wobei der Chloramin-Auslass (17) in Fluidverbindung mit einer Aufbewahrungsvorrichtung steht.

3. Verwendung nach Anspruch 1, wobei der Chloramin-Auslass (17) in Fluidverbindung mit einem zu behandelnden Vorgang steht.

## Revendications

1. Utilisation d'un appareil (10) pour la production de chloramine, comprenant :
i) une première conduite d'alimentation (12),
ii) une seconde conduite d'alimentation (14),
iii) un mélangeur statique en ligne (16), et
iv) une sortie de chloramine (17) ;
dans laquelle la première conduite d'alimentation (12) et la seconde conduite d'alimentation (14) sont en connexion fluidique avec la sortie de chloramine (17),
dans laquelle la première conduite d'alimentation (12) et la seconde conduite d'alimentation (14) sont utilisées pour alimenter une source de chlore concentré et une source d'amine concentrée pour la production de la chloramine.

2. Utilisation selon la revendication 1, dans laquelle la sortie de chloramine (17) est en connexion fluidique avec un dispositif de stockage.

3. Utilisation selon la revendication 1, dans laquelle la sortie de chloramine (17) est en connexion fluidique avec un processus en cours de traitement.
